# EUROPEAN PATENT SPECIFICATION

(11) **EP 4 000 988 B1**
(45) Date of publication and mention of the grant of the patent: **05.07.2023**
(21) Application number: 20208120.4
(22) Date of filing: 17.11.2020
(51) Int. Cl.: B60L 53/16, G01M 17/007, H01R 13/633, B60L 53/31

(54) **CHARGING STATION COMPRISING AN INCLINATION SENSOR HAVING A CONDUCTIVE LIQUID**
LADESTATION MIT EINEM NEIGUNGSSENSOR MIT EINER LEITENDEN FLÜSSIGKEIT
STATION DE CHARGE COMPRENANT UN CAPTEUR D'INCLINAISON CONTENANT UN LIQUIDE CONDUCTEUR

(43) Date of publication of application: 25.05.2022
(73) Proprietor: Vestel Elektronik Sanayi ve Ticaret A.S., 45030 Manisa (TR)
(72) Inventor: YILMAZ, Samet, 45030 Manisa (TR); TÜNAY, Erkan, 45030 Manisa (TR)
(74) Representative: Kehl, Ascherl, Liebhoff & Ettmayr Patentanwälte Partnerschaft mbB

(56) References cited:
- WO-A1-2013/020284
- WO-A1-2019/215423
- CN-A- 108 045 245
- KR-A- 20120 097 107
- US-A1- 2020 009 967

## Description

### TECHNICAL FIELD

The present invention refers according to claim 1 to a charging station for charging electric vehicles and according to claim 15 to a method for charging electric vehicles.

### BACKGROUND

Document KR20120097107A discloses a tilt sensor that measures the inclination of a charging device due to external impact and outputs the measured result as a specific signal. A controller receives a sensor signal from the tilt sensor and controls the on and off of a switch according to the sensor signal. A switch switches on and off the connection of an electric vehicle according to a control signal of the controller.

Document WO2013020284 discloses a charging pole. The charging pole comprises a main switch, a main contactor, a second contactor, a charging coupler, at least one sensor and a control unit. The sensor is used to detect acceleration and/or a tilt angle of the charging pole due to a transient outside force, for example a collision force caused by the EV driver's mis-operation. When the acceleration and/or the tilt angle is beyond a preset threshold, the control unit will instruct the main contactor to break the power contact of the charging coupler, so that the charging pole will be power-off.

Document RU188167U1 discloses a tilt angle sensor inside the body of a charging station, which allows to control the position of the charging station and, in the event of a change in position caused by natural disasters or the onset of actions of third parties, the charging station goes into emergency mode, in which the controller turns off the power supply to avoid electric shock to a person, as well as sends an urgent emergency message to a remote central server to the operator-engineer.

Document JP2010263666A discloses an electric vehicle charging station having a charging connection means for connecting a power supply source to an electric vehicle includes a circuit breaker for interrupting power supply from the power supply source to the charging connection means, and a control means for output of a circuit interruption signal to the circuit breaker, wherein the control means outputs the circuit interruption signal on the basis of the impact detection data of an impact sensor for sensing an impact to the charging station as an impact acceleration.

Document CN109795349A discloses a charging pile system, that comprises a server, a plurality of charging piles connected with server signal and a plurality of maintenance interactive terminals connected with the server. Each charging pile comprises a main flow module, a fault self-detection module connected with the main flow module, a communication module connected with the fault detection module and a positioning module connected with the communication module; the main communication module is provided with an input end and an output end and includes an input protection module, and the input protection module is connected between the input end and the output end of the main flow module; the fault self-detection module detects the internal environment of the charging piles and generates fault detection signals; the input protection module generates protection action according to the fault detection signals; the communication module locates the pile positioning information of the modules according to the fault detection signals and generates maintenance request signals; the server sends maintenance assignment messages to the maintenance interactive terminals according to the maintenance request signals, maintenance efficiency of the charging piles is improved.

Thus, a car charger has inputs and outputs which has high power. Some careless drivers may hit the charging station after the charge has run out or when approaching the charging station for charging. This can be very dangerous for the car and driver. Because the high current and voltage inputs and outputs in the charging station are located on the station. A problem with the system isolation as a result of impact may cause damage to the user or the car. In this case, it is a requirement for both the health of the driver and the safety of the car that the system detects the impact and activates the subsequent safety protocols.

### OBJECT OF THE INVENTION

Thus, it is the object of the present invention to enhance the safety of charging stations for charging electric vehicles.

### SUMMARY OF THE INVENTION

The before mentioned object is solved by a charging station, in particularly a pole-like charging station, according to claim 1. Said charging station is preferably a charging station for charging at least one electric vehicle, in particular at least one electric car. Said charging station preferably comprises at least a housing, wherein the housing has a column-like shape, in particular a straight column. A power outlet is preferably arranged or attached to the outside of the housing, wherein the power outlet is at least indirectly, and preferably directly, connectable to an electric vehicle for charging the electric vehicle.

At least an electric control unit, a sensor unit for sensing movements of the charging station and/or a power supply unit are preferably at least partially or completely arranged inside said housing. The electric control unit preferably controls power flow from the power supply unit to the power outlet. The sensor unit preferably provides a sensor signal or sensor data representing an inclination and/or a direction of inclination, wherein the sensor unit preferably comprises a receiving space and a first - preferably ring-shaped - sensor part, wherein the receiving space is at least partially filled with a conductive liquid, wherein the conductive liquid is preferably electrically coupled with a first contact.

The first ring-shaped sensor part preferably forms one conductive surface or a plurality of conductive surfaces or surface sections facing a center of the first ring-shaped sensor part. Each conductive surface or surface section is preferably coupled with at least one second contact. In a default configuration, the plurality of surfaces or surface sections is preferably spaced apart from the conductive liquid and wherein in the default configuration, a longitudinal axis of the charging station matches with a vertical axis.

In a first inclined configuration, the longitudinal axis of the charging station is preferably inclined at an angle above a predefined threshold with respect to the vertical axis. The conductive liquid preferably connects in the first inclined configuration the first contact and via at least one of the conductive surfaces or via at least one of the conductive surface sections at least the second contact or at least one second contact. The sensor unit preferably provides sensor signals or sensor data according to which one or ones of the respective conductive surfaces or surface sections is/are in contact with the conductive liquid in the first inclined configuration, whereby the sensor signals or sensor data represent the inclination and/or the direction of inclination. The control unit preferably processes the sensor signals or sensor data and interrupts a power supply in case the inclination represented by the sensor signal or sensor data is above a predefined inclination threshold and/or in case the direction of inclination represented by the sensor signal or sensor data represents a predefined direction of inclination.

This solution is beneficial since an impact on a charging station, in particular by a vehicle, can be detected in a reliable manner. Furthermore, inclination and/or orientation of the inclination can be detected.

Further embodiments are described by the dependent claims and/or the following specification parts.

The conductive surfaces or surface sections are according to a further preferred embodiment of the present invention part of one or multiple elements, in particularly wall member(s) or wall section(s), which differ in electric resistance from each other. This embodiment is beneficial since the individual elements can be designed with different shapes (e.g., thick, thin) or different materials (cupper, steal, iron, aluminum, ceramic) to set up differing conductivity properties.

Each of the conductive surfaces or surface sections comprises according to a further preferred embodiment of the present invention a second contact, wherein the respective level of current and/or level of voltage per conductive surface or surface section differs from the level of current and/or level of voltage of the other conductive surfaces or surface sections. This embodiment is beneficial since each possible circuit comprises different current and/or voltage properties. Thus, in dependency on the measured or evaluated properties it can be determined in which direction the conductive liquid has flowed.

The center axis of the first ring-shaped sensor part extends according to a further preferred embodiment of the present invention in the default configuration in parallel or coaxial to the vertical axis. This embodiment is beneficial since a distance between the receiving space and the first ring-shaped part is preferably constant. Thus, the flow path of the conductive liquid for closing a circuit has preferably the same length (starting from a default position) for each of the circuits which might be set up between the first contact and any of the second contacts.

The first ring-shaped sensor part comprises according to a further preferred embodiment of the present invention at least four and preferably eight or sixteen conductive surfaces or surface sections, wherein said conductive surfaces or surface sections are electrically isolated from each other. This embodiment is beneficial since due to the isolation members, crosstalk between two neighboring surfaces or surface sections can be avoided, thus the quality of the detected signals is enhanced.

A second - preferably ring-shaped - sensor part is arranged according to a further preferred embodiment of the present invention in coaxial manner above the first ring-shaped sensor part, wherein the first ring-shaped sensor part is arranged between the second ring-shaped sensor part and the receiving space, wherein the second ring-shaped sensor part comprises one conductive surface facing the center axis, wherein the conductive surface at least mainly and preferably completely extends along a circumferential direction, wherein the conductive surface of the second ring-shaped part is coupled with a third contact. This embodiment is beneficial since due to the plurality of sensor parts, the inclination and/or a degree of inclination can be determined in a reliable manner. Thus, in case the conductive liquid contacts the second ring-shaped sensor part, it is clear that the inclination of the charging station must be larger compared to a situation in which the liquid only contacts the first ring-shaped sensor part.

Thus, in a second inclined configuration, the conductive liquid contacts one or at least one conductive surface or one or at least one conductive surface section of the first ring-shaped sensor part and the conductive surface of the second ring-shaped sensor part, wherein the sensor unit provides second sensor signals or second sensor data in case the conductive liquid also contacts the conductive surface of the second ring-shaped sensor part, wherein the second sensor signals or second sensor data represents the inclination and/or the direction of inclination.

A second ring-shaped sensor part is arranged according to a further preferred embodiment of the present invention in a coaxial manner above the first ring-shaped sensor part, wherein the second ring-shaped sensor part forms a plurality of conductive surfaces or surface sections facing a center of the second ring-shaped sensor part, wherein each conductive surface or surface section is coupled with at least one third contact, wherein in a default configuration, the plurality of surfaces or surface sections is spaced apart from the conductive liquid. In a second inclined configuration, the conductive liquid preferably contacts one or at least one conductive surface or one or at least one conductive surface section of the first ring-shaped sensor part and preferably one or at least one conductive surface, in particular of a plurality of conductive surfaces, or one or at least one conductive surface section, in particular of a plurality of conductive surface sections, of the second ring-shaped sensor part. The conductive liquid preferably connects in the second inclined configuration the first contact and via the conductive surface or surface section the at least second contact or at least one second contact of the first ring-shaped part. The conductive liquid preferably connects in the second inclined configuration via the conductive surface or surface section of the second ring-shaped part the one third contact or at least one third contact of the second ring-shaped part. The sensor unit preferably provides sensor signals or sensor data in dependency on the respective conductive surface or surface section of the second ring-shaped part which is/are in contact with the conductive liquid in the second inclined configuration, wherein the sensor signals or sensor data represent the inclination and/or the direction of inclination. The control unit preferably processes the sensor signals or sensor data and interrupts the power supply in case the inclination represented by the sensor signal or sensor data is above a predefined inclination threshold and/or in case the direction of inclination represented by the sensor signal or sensor data represents a predefined direction of inclination.

This embodiment is beneficial since multiple sensor parts, in particular ring-shaped sensor parts, can comprise multiple conductive surfaces or surface sections. Thus, the inclination and/or orientation of inclination can be detected or evaluated in a more detailed manner in case multiple or each sensor part has several surfaces or surface section for closing circuits with different properties.

A third - preferably ring-shaped - sensor part is arranged according to a further preferred embodiment of the present invention in a coaxial manner above the second ring-shaped sensor part, wherein the second ring-shaped sensor part is arranged between the first ring-shaped sensor part and the third ring-shaped sensor part, wherein the third ring-shaped sensor part comprises one conductive surface facing the center axis, wherein the conductive surface at least mainly and preferably completely extends along a circumferential direction, wherein the conductive surface of the third ring-shaped part is preferably coupled with a fourth contact. This embodiment is beneficial since a larger range of inclination can be detected in case a third sensor part is part of the sensor unit. However, it is conceivable that further sensor parts, in particular ring-shaped sensor parts, like a fourth, fifth or sixth or up to ten or up to twenty preferably coaxially arranged sensor parts are provided. Thus, in a third inclined configuration, the conductive liquid contacts preferably one or at least one conductive surface or one or at least one conductive surface section of the first ring-shaped sensor part and the conductive surface of the second ring-shaped sensor part and the conductive surface of the third ring-shaped sensor part. The sensor unit preferably provides third sensor signals or third sensor data in case the conductive liquid also contacts the conductive surface of the third ring-shaped sensor part, wherein the third sensor signals or third sensor data represents the inclination and/or the direction of inclination.

A third ring-shaped sensor part is arranged according to a further preferred embodiment of the present invention in a coaxial manner above the second ring-shaped sensor part, wherein the third ring-shaped sensor part preferably forms a plurality of conductive surfaces or surface sections facing a center of the third ring-shaped sensor part, wherein each conductive surface or surface section is preferably coupled with at least one fourth contact, wherein in a default configuration, the plurality of surfaces or surface sections is preferably spaced apart from the conductive liquid. In a third inclined configuration, the conductive liquid preferably contacts one or at least one conductive surface or one or at least one conductive surface section of the third ring-shaped sensor part and one or at least one conductive surface or one or at least one conductive surface section of the second ring-shaped sensor part and one or at least one conductive surface or one or at least one conductive surface section of the first ring-shaped sensor part.

The conductive liquid preferably connects in the third inclined configuration the first contact and via the conductive surface or surface section the at least second contact or at least one second contact of the first ring-shaped part and wherein the conductive liquid preferably connects in the third inclined configuration via the conductive surface or surface section of the second-ring shaped part the one third contact or at least one third contact of the second ring-shaped part and wherein the conductive liquid connects in the third inclined configuration via the conductive surface or surface section of the third ring-shaped part the fourth contact or at least one fourth contact of the third ring-shaped part. The sensor unit preferably provides sensor signals or sensor data in dependency on the respective conductive surface or surface section of the third ring-shaped part which is/are in contact with the conductive liquid in the second inclined configuration, wherein the sensor signals or sensor data represent the inclination and/or the direction of inclination. The control unit preferably processes the sensor signals or sensor data and interrupts the power supply in case the inclination represented by the sensor signals or sensor data is above a predefined inclination threshold and/or in case the direction of inclination represented by the sensor signals or sensor data represents a predefined direction of inclination.

This embodiment is beneficial since multiple sensor parts, in particularly ring-shaped sensor parts, can comprise multiple conductive surfaces or surface sections. Thus, the inclination and/or orientation of inclination can be detected or evaluated in a more detailed manner in case multiple or each sensor part has several surfaces or surface section for closing circuits with different properties.

The first contact is according to a further preferred embodiment of the present invention permanently biased with current and/or voltage. This embodiment is beneficial since power flow is established in case the conductive liquid contacts any of the conductive surfaces or surface sections. The properties of the power flow hereby preferably depend on the conductive surface or surface section the conductive liquid is flowing to in response to a tilting movement of the charging station.

The second contact or each second contact is according to a further preferred embodiment of the present invention permanently biased with current and/or voltage and/or the third contact or each third contact is permanently biased with current and/or voltage, and/or the fourth contact or each fourth contact is permanently biased with current and/or voltage. Preferably, the current and/or voltage differs from conductive surface or surface section to conductive surface or surface section. Preferably each conductive surface or surface section is biased with a different current and/or voltage. Preferably each conductive surface or surface section of a sensor part is biased with a different current and/or voltage. It is possible that the two or multiple or the majority or all sensor parts are designed in an identical manner. This embodiment is beneficial since closing of a circuit is established in case the conductive liquid contacts any of the conductive surfaces or surface sections. Since the properties of the power flowing within said closed circuit are known, it is known which conductive surface or surface section the conductive liquid contacts, thus it is known in which direction the inclination is oriented.

An angle between the longitudinal axis of the charging station and a horizontal axis is according to a further preferred embodiment of the present invention smaller in the second inclined configuration compared to the first inclined configuration and an angle between the longitudinal axis of the charging station and the horizontal axis is smaller in the third inclined configuration compared to the second inclined configuration. This embodiment is beneficial since the inclination can be determined in a very precise manner.

The conductivity of the conductive liquid is according to a further preferred embodiment of the present invention above 5×10⁻⁶ S/m, in particular above 5×10⁻³ S/m or above 5x10° S/m or above 1×10² S/m or above 1×10³ S/m or above 1×10⁴ S/m or above 1×10⁶ S/m. This embodiment is beneficial since the conductive liquid can be selected in such a manner to fit best into the overall sensor setting.

The conductive liquid is according to a further preferred embodiment of the present invention a metal, in particular mercury, or an alloy, in particular an alloy comprising alkali metals or consisting of alkali metals or an alloy comprising gallium, in particular Galinstan, or an alloy comprising mercury, or an electrolyte solution, in particular ethanoic acid or sulfuric acid. This embodiment is beneficial since the conductive liquid can be selected in such a manner to fit best into the overall sensor setting.

The above-mentioned object is also solved by a method according to claim 15 for interrupting power supplied from a charging station to at least one electric vehicle, in particular an electric car. Said method preferably at least comprises the steps: Providing a charging station, wherein the charging station comprises a housing, wherein the housing preferably has a column-like shape, wherein the charging station comprises a power outlet, wherein the power outlet is arranged or attached to the outside of the housing, wherein the power outlet is connected to the electric vehicle for charging the electric vehicle, wherein at least a power supply unit for providing power flow to the power outlet, an electric control unit for controlling power flow from the power supply unit to the electric vehicle and/or a sensor unit for sensing movements of the charging station is/are part of the charging station, wherein the sensor unit preferably comprises a receiving space and a first - preferably ring-shaped - sensor part, wherein the receiving space is at least partially filled with a conductive liquid, wherein the conductive liquid is electrically coupled with a first contact, wherein the first sensor part preferably forms at least one or a plurality of conductive surfaces or surface sections facing a center of the first ring-shaped sensor part, wherein each conductive surface or surface section is preferably coupled with at least one second contact, in particularly the same second contact. In a default configuration, the plurality of surfaces or surface sections is preferably spaced apart from the conductive liquid and wherein in the default configuration, a longitudinal axis of the charging station preferably matches a vertical axis. Tilting the charging station into a first inclined configuration, wherein in the first inclined configuration, the longitudinal axis of the charging station is inclined at an angle above a predefined threshold with respect to the vertical axis, wherein the conductive liquid connects in the first inclined configuration the first contact via the conductive surface or surface section to at least the second contact or at least one second contact. Providing a sensor signal or sensor data by the sensor unit, wherein the sensor unit provides sensor signals or sensor data according to which one or ones of the respective conductive surfaces or surface sections is/are in contact with the conductive liquid in the first inclined configuration, whereby the sensor signal or sensor data represent the inclination and/or the direction of inclination. Processing the sensor signals or sensor data by the control unit. Interrupting the power supply in case the processed sensor signal or sensor data represents a predefined inclination threshold and/or in case the direction of inclination represented by the sensor signal or sensor data represents a predefined direction of inclination. Interrupting the power supply is preferably carried out by shifting a physical switch, which is controlled by the control unit and/or commands for switching the physical switch are provided by the control unit.

The present invention might refer to a sensor unit. Said sensor unit is described before and in the following. However, said sensor unit preferably at least comprises the following features: a receiving space and a first sensor part, in particular ring-shaped, wherein the receiving space is at least partially filled with a conductive liquid, wherein the conductive liquid is electrically coupled with a first contact, wherein the first sensor part forms a plurality of conductive surfaces or surface sections facing a center of the first sensor part, wherein each conductive surface or surface section is coupled with at least one second contact, wherein in a default configuration the plurality of surfaces or surface sections is spaced apart from the conductive liquid and wherein in the default configuration, a longitudinal axis of the charging station matches a vertical axis. The conductive liquid connects in a first inclined configuration the first contact and via at least one of the conductive surfaces or via at least one of the conductive surface sections at least the second contact or at least one second contact. The sensor unit preferably provides sensor signals or sensor data according to which one or ones of the respective conductive surfaces or surface sections is/are in contact with the conductive liquid in the first inclined configuration, whereby the sensor signals or sensor data represent the inclination and/or the direction of inclination.

If not otherwise indicated the word "conductive" is used in view of the present invention in the sense of "electrically conductive".

Further features, goals and advantages of the present invention will now be described in association with the accompanying drawings, in which exemplary components of the invention are illustrated. Components of the devices and methods according to the invention, which are at least essentially equivalent to each other with respect to their function can be marked by the same reference numerals, wherein such components do not have to be marked or described in all of the drawings.

In the following description, the invention is described by way of example only with respect to the accompanying drawings.

### BRIEF DESCRIPTION OF THE FIGURES

- Fig. 1a: schematically shows an example or a first sensor part;
- Fig. 1b: schematically shows an example of a second sensor part;
- Fig. 1c: schematically shows an example of a sensor unit comprising at least the first sensor part and the second sensor part;
- Fig. 2a: schematically shows a side view of an example of the sensor unit;
- Fig. 2b-e: schematically show the sensor unit inclined in different angles with respect to the horizontal axis;
- Fig. 3a: schematically shows an example of a charging station according to the present invention for charging electric vehicles; and
- Fig. 3b: schematically shows a situation in which an electric vehicle becomes charged by the charging station.

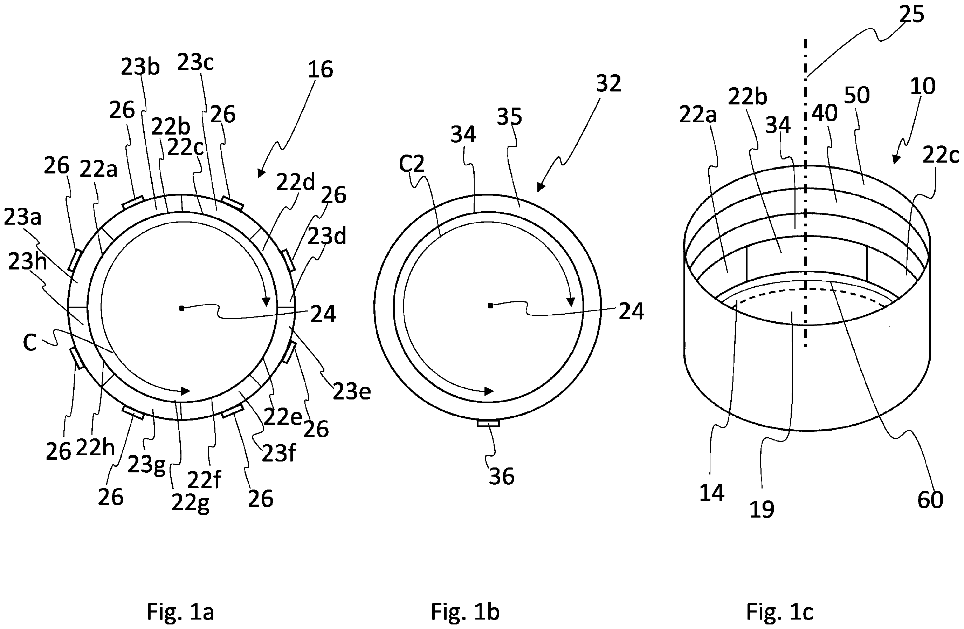

Fig. 1a shows an example of a sensor part 16. That sensor part 16 is preferably a first sensor part and preferably ring-shaped. Ring-shaped preferably means circular or rectangular, in particular square-shaped.

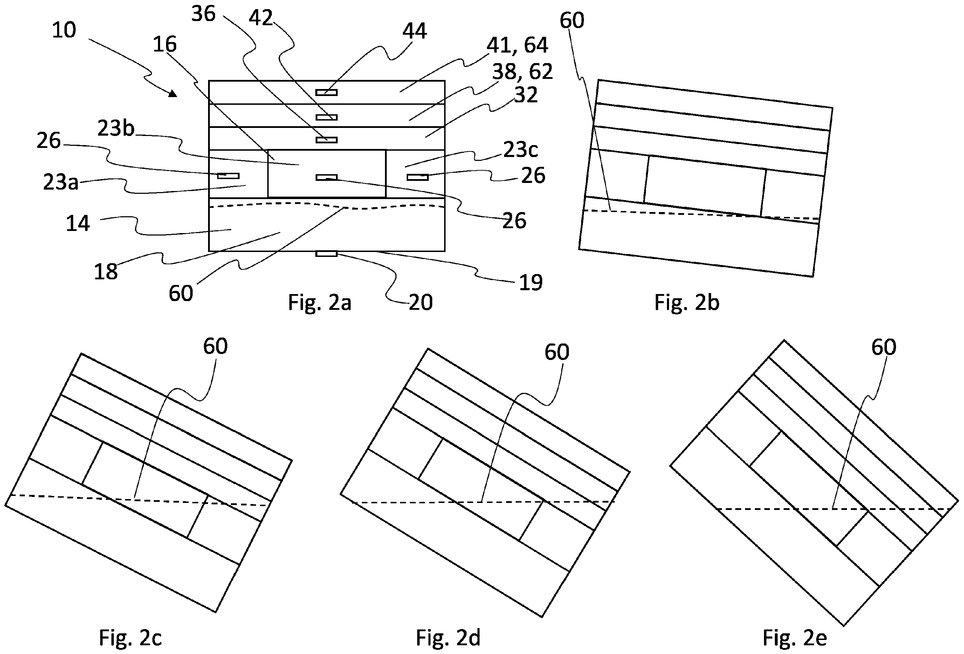

The first ring-shaped sensor part 16 comprises multiple conductive wall members 23a-h forming multiple inner surfaces 22a-h. The surfaces 22a-h and/or the wall members 23a-h are preferably electrically isolated from each other. "Electrically isolated" means that an isolating material or substance is arranged between two neighboring wall members or surfaces. Said isolating material or substance preferably has an electric resistance of more than 10⁸ Ω·cm, in particular of more than 10⁹ Ω·cm or of more than 10¹⁰ Ω·cm. Each wall member 22a-h preferably comprises a contact 26 for closing a circuit with contact 20 (cf. Fig. 2a). Contact 26 can be considered as a second contact since contact 20 can be considered as a first contact. Reference number 24 indicates a virtual center of the entirety of surfaces 22a-h. Reference number C indicates a circumferential direction, wherein the wall members 23a-h and/or the surfaces 22a-h are arranged side by side in said direction.

Fig. 1b shows a further example of a sensor part 32. That sensor part 32 is preferably a second senor part and is preferably ring-shaped. The second ring-shaped sensor part 32 comprises an inner surface 34 facing the virtual center 24. The inner surface 34 is conductive, wherein the inner surface 34 is part of conductive wall member 35. Wall member 35 comprises at least one contact 36 or exactly one contact 36 for closing a circuit with contact 20 (cf. Fig. 2a). Contact 36 can be considered as a third contact. Reference number C2 indicates a circumferential direction, wherein the wall member 35 and/or the surface 34 preferably completely extends in said circumferential direction.

Fig. 1c shows an example of a sensor unit 10. That sensor unit 10 comprises a receiving space 14. A conductive liquid 18 is arranged in said receiving space 14. Reference number 60 indicates an upper surface level of the conductive liquid 18. The upper surface level 60 of the conductive liquid 18 is spaced apart from surfaces 22a-h of a first sensor part 16 in a default configuration. Thus, power flow though a circuit is avoided since no circuit is closed in the default configuration. Preferably conductive surface 34 of the second sensor part 32 is arranged in a coaxial manner above the first sensor part 16. Additionally, or alternatively, conductive surface 40 of a third sensor part 38 (cf. Fig. 2a) is arranged in a coaxial manner above the second sensor part 32. Additionally, or alternatively, conductive surface 50 of a fourth sensor part 41 (cf. Fig. 2a) is arranged in a coaxial manner above the third sensor part 38.

The individual sensor parts 16, 32, 38, 41 (cf. Fig. 2a) are preferably electrically isolated from each other. Electrically isolated means that an isolating material or substance is arranged between two neighboring sensor parts, thus electrically conductive sections of said neighboring sensor parts preferably do not directly contact each other. Said isolating material or substance preferably has an electric resistance of more than 10⁸ Ω·cm, in particularly of more than 10⁹ Ω·cm or of more than 10¹⁰ Ω·cm.

Reference number 25 indicates a virtual center axis, wherein the center of each sensor part 16, 32, 38, 41 or of at least two sensor parts is positioned on said center axis.

Fig. 2a schematically shows a side view of the sensor unit shown in Fig. 1c. This side view shows a default configuration. The level 60 of the conductive liquid 18 inside the receiving space 14 is spaced apart from the first sensor part 16. The receiving space 14 comprises a first contact 20, in particular for closing a circuit with another contact 26, 36, 42. Said contact 20 is preferably arranged at the bottom 19 or a side wall of the receiving space 20, wherein the bottom 19 is preferably electrically conductive. Reference number 26 indicates contacts preferably arranged on the outside of wall members 23a-h. The second sensor part 32 preferably comprises only one contact 36, which is preferably arranged on the outside of wall member 35 (cf. Fig. 1b). Additionally, or alternatively, the third sensor part 38 preferably comprises only one contact 42, which is preferably arranged on the outside of wall member 62. Additionally, or alternatively, the fourth sensor part 41 preferably comprises only one contact 44, which is preferably arranged on the outside of wall member 64.

Fig. 2b schematically shows a first inclined configuration. In this first inclined configuration only one surface (of 23a-h) is contacted by the conductive liquid 18. Thus, a circuit is closed and power can flow from one of the contacts 20 to the other contact 26 (or vice versa). Since the position of the respective surface (the one of 23a-h) is known, it is known in which direction the conductive liquid 18 has flowed and therefore the direction of inclination can be derived from the properties of the closed circuit.

Fig. 2c schematically shows a second inclined configuration. In this second inclined configuration, the sensor unit 10 is more inclined compared to the first inclined configuration. It can be seen from Fig. 2c that the conductive liquid contacts the second sensor part 32 but not the third sensor part 38. Thus, the circuit between contact 20 and contact 36 is closed by means of the conductive liquid 18. Since the height of the respective surface 34 (cf. Fig. 1c) is known, it is known in which inclination range the sensor unit 10 is inclined with respect to the horizontal axis.

Fig. 2d schematically shows a third inclined configuration. In this third inclined configuration, the sensor unit 10 is more inclined compared to the second inclined configuration. It can be seen from Fig. 2d that the conductive liquid contacts the third sensor part 38 but not the fourth sensor part 41. Thus, the circuit between contact 20 and contact 42 is closed by means of the conductive liquid 18. Since the height of the respective surface 42 (cf. Fig. 1c) is known, it is known in which inclination range the sensor unit 10 is inclined with respect to the horizontal axis.

Fig. 2e schematically shows a fourth inclined configuration. In this fourth inclined configuration the sensor unit 10 is more inclined compared to the third inclined configuration. It can be seen from Fig. 2e that the conductive liquid contacts the fourth sensor part 41. Thus, the circuit between contact 20 and contact 44 is closed by means of the conductive liquid 18. Since the position of the respective surface 42 (cf. Fig. 1c) is known, it is known in which inclination or above which inclination the sensor unit 10 is inclined with respect to the horizontal axis.

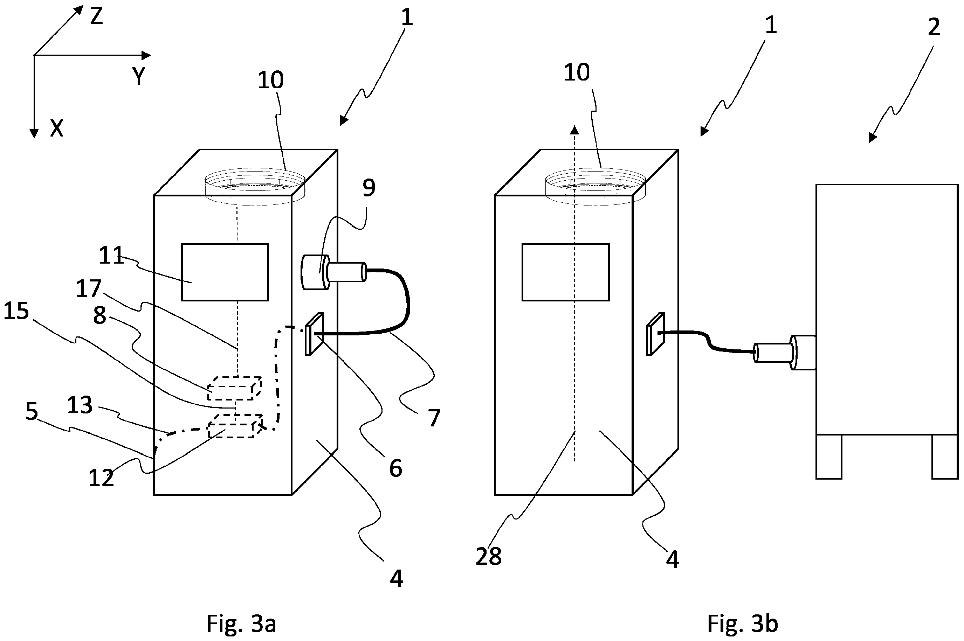

Fig. 3a schematically shows an example of a charging station 1 according to the present invention. That charging station 1 preferably comprises a housing 4 and a power outlet 6. The charging station preferably comprises a cable 7 which is connected to the power outlet 6 and which comprises a connection plug 9 for connecting to an electric vehicle 2. However, it is also conceivable that the charging station 1 does not comprise such a cable 7 and users always have to attach their own cable to the power outlet 6.

The charging station 1 also comprises a power supply unit 12 which interrupts or allows power to flow from a source 5 via power line 13 to the power outlet 6. The power supply 12 is preferably controlled by control unit 8. Control unit 8 and the power supply unit 12 are preferably connected via a data or signal connection 15. The control unit 8 is preferably connected via a data and/or signal and/or power connection 17 with sensor unit 10. Electrical energy for establishing the power supply via a closed circuit in the sensor unit 10 is preferably also provided via connection 17. However, it is also conceivable that electrical energy is provided via an additional or alternative connection. In case the control unit 8 receives data or signals from the sensor unit 10 that represent an inclination above a predefined threshold and/or in a predefined direction, the control unit 8 causes the power supply unit 12 to interrupt the power supply, in particular immediately.

Reference number 11 indicates an optional display for inputting commands and/or for displaying the status of the charging station 1 and/or for displaying a charging status.

Fig. 3b schematically shows charging of an elective vehicle 2 by means of the charging station 1 according to the present invention. Reference number 28 indicates the longitudinal direction of the charging station 1 and/or of the housing 4.

Thus, the present invention refers to a charging station 1 for charging at least one electric vehicle 2, in particular at least one electric car. Said charging station comprises: A housing 4, wherein the housing 4 has a column-like shape, wherein a power outlet 6 is arranged or attached at the outside of the housing 4, wherein the power outlet 6 is at least indirectly, and preferably directly, connectable to the electric vehicle 2 for charging the electric vehicle 2, wherein at least an electric control unit 8, a sensor unit 10 for sensing movements of the charging station 1 and a power supply unit 12 are arranged inside said housing 4, wherein the electric control unit 8 controls power flowing from the power supply unit 12 to the power outlet 6, wherein the sensor unit 10 provides a sensor signal or sensor data representing an inclination and/or a direction of inclination, wherein the sensor unit 10 comprises a receiving space 14 and a first ring-shaped sensor part 16, wherein the receiving space 14 is preferably at least partially filled with a conductive liquid 18, wherein the conductive liquid 18 is electrically coupled with a first contact 20, wherein the first ring shaped sensor part 16 forms a plurality of conductive surfaces 22a-d or surface sections 22a-d facing a center 24 of the first ring-shaped sensor part 16, wherein each conductive surface 22a-d or surface section 22a-d is coupled with at least one second contact 26, wherein in a default configuration, the plurality of surfaces 22a-d or surface sections 22a-d is spaced apart from the conductive liquid 18 and wherein in the default configuration, a longitudinal axis 28 of the charging station 1 matches a vertical axis X.

Additionally, or alternatively, conductive surfaces are preferably designed in such a way that the shape shall be determined according to the sensitivity requirement in the enclosed container. A conductive liquid will be added to the container and the container will be placed preferably in the appropriate upper part of the vehicle charging station, wherein an upper part is preferably above 50% of the height of the charging station, in particular above 70% of the height of the charging station, in particular above 80% of the height of the charging station, in particular above 90% of the height of the charging station, in particular above 95% of the height of the charging station. The circuit will be completed by the conductive liquid that touches the sensor pins and/or contacts and/or conductive surface or conductive surface section on the test surface according to the impact direction occurring in the product and the user will be able to easily detect an impact direction. With the help of a simple microcontroller, both the mechanically crashed direction and the angle of inclination will be learned and if there is a dangerous situation, the system power can be cut off automatically.

### List of reference numbers

| | | | |
|---|---|---|---|
| 1 | charging station | 24 | center (virtually) |
| 2 | electric vehicle | 25 | center axis (virtually) |
| 4 | housing | 26 | second contact |
| 5 | source | 28 | longitudinal axis |
| 6 | power outlet | 32 | second ring shaped part |
| 7 | cable | 34 | conductive surface of the second |
| 8 | control unit | | ring shaped part |
| 9 | connection plug | 35 | wall member |
| 10 | sensor unit | 36 | third contact |
| 11 | display | 38 | third ring shaped sensor part |
| 12 | power supply unit | 40 | conductive surface of third ring |
| | | | shaped part |
| 13 | power line | 41 | fourth ring shaped sensor part |
| 14 | receiving space | 42 | fourth contact |
| 15 | data or signal connection between control unit and power supply unit | 44 | fifth contact |
| 16 | first ring shaped sensor part | 50 | conductive surface of a fourth ring shaped part |
| 17 | data and/or signal and/or power connection between control unit and sensor unit | 60 | liquid level |
| | | 62 | wall member of third sensor part |
| 18 | conductive liquid | 64 | wall member of fourth sensor part |
| 19 | conductive bottom of receiving space | C | circumferential direction |
| 20 | first contact | C2 | second circumferential direction |
| 22a-h | conductive surfaces / conductive surface sections | X | vertical axis |
| | | Y | horizontal axis |
| 23a-h | wall member | Z | width axis |

## Claims

1. Charging station (1) for charging at least one electric vehicle (2), in particular at least one electric car,
at least comprising
a housing (4),
wherein the housing (4) has a column-like shape,
wherein a power outlet (6) is arranged or attached to the outside of the housing (4), wherein the power outlet (6) is at least indirectly, and preferably directly, connectable to the electric vehicle (2) for charging the electric vehicle (2),
wherein at least an electric control unit (8), a sensor unit (10) for sensing movements of the charging station (1) and a power supply unit (12) are arranged inside said housing (4),
wherein the electric control unit (8) controls power flowing from the power supply unit (12) to the power outlet (6),
wherein the sensor unit (10) provides a sensor signal or sensor data representing an inclination and/or a direction of inclination,
wherein the sensor unit (10) comprises a receiving space (14) and a first ring-shaped sensor part (16), wherein the receiving space (14) is at least partially filled with a conductive liquid (18), wherein the conductive liquid (18) is electrically coupled with a first contact (20),
wherein the first ring-shaped sensor part (16) forms a plurality of conductive surfaces (22a-d) or surface sections (22a-d) facing a center (24) of the first ring-shaped sensor part (16),
wherein each conductive surface (22a-d) or surface section (22a-d) is coupled with at least one second contact (26), wherein in a default configuration, the plurality of surfaces (22a-d) or surface sections (22a-d) is spaced apart from the conductive liquid (18) and wherein in the default configuration, a longitudinal axis (28) of the charging station (1) matches a vertical axis (X),
wherein in a first inclined configuration, the longitudinal axis (28) of the charging station (1) is inclined at an angle above a predefined threshold with respect to the vertical axis (X),
wherein the conductive liquid (18) connects in the first inclined configuration the first contact (20) and via at least one of the conductive surfaces (22a-d) or via at least one of the conductive surface sections (22a-d) at least the second contact (26) or at least one second contact (26),
wherein the sensor unit (10) provides sensor signals or sensor data according to which one or ones of the respective conductive surfaces (22a-d) or surface sections (22a-d) is/are in contact with the conductive liquid in the first inclined configuration, whereby the sensor signal or sensor data represent the inclination and/or the direction of inclination,
wherein the control unit (8) processes the sensor signal or sensor data and interrupts a power supply in case the inclination represented by the sensor signal or sensor data is above a predefined inclination threshold and/or in case the direction of inclination represented by the sensor signal or sensor data represents a predefined direction of inclination.

2. Charging station according to claim 1,
**characterized in that**
the conductive surfaces (22a-d) or surface sections (22a-d) are part of one or multiple elements, in particular wall member/s or wall section/s, which differ in electrical resistance from each other.

3. Charging station according to claim 1 or 2,
**characterized in that**
each of the conductive surfaces (22a-d) or surface sections (22a-d) comprises a second contact (26), wherein the respective level of current and/or level of voltage per conductive surface or surface section differs from the level of current and/or level of voltage of the other conductive surfaces (22a-d) or surface sections (22a-d).

4. Charging station according to any one of claims 1 to 3,
**characterized in that**
the center axis (25) of the first ring-shaped sensor part (16) extends in the default configuration in parallel or coaxial to the vertical axis (X).

5. Charging station according to any one of claims 1 to 4,
**characterized in that**
the first ring-shaped sensor part (16) comprises at least four and preferably eight or sixteen conductive surfaces (22a-d) or surface sections (22a-d), wherein said conductive surfaces (22a-d) or surface sections (22a-d) are electrically isolated from each other.

6. Charging station according to any one of claims 1 to 5,
**characterized in that**
a second ring shaped sensor part (32) is arranged in a coaxial manner above the first ring-shaped sensor part (16), wherein the first ring-shaped sensor part (16) is arranged between the second ring-shaped sensor part (32) and the receiving space (14), wherein the second ring-shaped sensor part (32) comprises one conductive surface (34) facing the center axis (25), wherein the conductive surface (34) at least mainly and preferably completely extends along a second circumferential direction (C2), wherein the conductive surface (34) of the second ring-shaped part (32) is coupled with a third contact (36).

7. Charging station according to claim 6,
**characterized in that**
in a second inclined configuration, the conductive liquid (18) contacts one or at least one conductive surface (22a-d) or one or at least one conductive surface section (22a-d) of the first ring-shaped sensor part (16) and the conductive surface (34) of the second ring-shaped sensor part (32), wherein the sensor unit (10) provides second sensor signals or second sensor data in case the conductive liquid (18) also contacts the conductive surface (34) of the second ring-shaped sensor part (32), wherein the second sensor signals or second sensor data represents the inclination and/or the direction of inclination.

8. Charging station according to claim 6 or 7,
**characterized in that**
a third ring-shaped sensor part (38) is arranged in a coaxial manner above the second ring-shaped sensor part (32), wherein the second ring-shaped sensor part (32) is arranged between the first ring-shaped sensor part (16) and the third ring-shaped sensor part (38), wherein the third ring-shaped sensor part (38) comprises one conductive surface (40) facing the center axis (25), wherein the conductive surface (40) at least mainly and preferably completely extends along a third circumferential direction (C3), wherein the conductive surface (40) of the third ring-shaped part (38) is coupled with a fourth contact (42).

9. Charging station according to claim 8,
**characterized in that**
in a third inclined configuration, the conductive liquid (18) contacts one or at least one conductive surface (22a-d) or one or at least one conductive surface section (22a-d) of the first ring-shaped sensor part (16) and the conductive surface (34) of the second ring-shaped sensor part (32) and the conductive surface (40) of the third ring-shaped sensor part (38), wherein the sensor unit (10) provides third sensor signals or third sensor data in case the conductive liquid (18) also contacts the conductive surface (40) of the third ring-shaped sensor part (38), wherein the third sensor signals or third sensor data represents the inclination and/or the direction of inclination.

10. Charging station according to any one of claims 1 to 9,
**characterized in that**
the first contact (20) is permanently biased with current and/or voltage,

11. Charging station according to any one of claims 6 to 9,
**characterized in that**
the second contact (26) or each second contact (26) is permanently biased with current and/or voltage
and/or
the third contact (36) or each third contact (36) is permanently biased with current and/or voltage,
and/or
the fourth contact or each fourth contact is permanently biased with current and/or voltage,

12. Charging station according to any one of claims 6 to 11,
**characterized in that**
an angle between the longitudinal axis (28) of the charging station (1) and a horizontal axis (Z) is smaller in the second inclined configuration compared to the first inclined configuration
and
an angle between the longitudinal axis (28) of the charging station (1) and the horizontal axis (Y) is smaller in the third inclined configuration compared to the second inclined configuration.

13. Charging station according to any one of claims 1 to 12,
**characterized in that**
the conductivity of the conductive liquid (18) is above 5×10⁻⁶ S/m, in particular above 5×10⁻³ S/m or above 5x10° S/m or above 1×10² S/m or above 1×10³ S/m or above 1×10⁴ S/m or above 1×10⁶ S/m.

14. Charging station according to any one of claims 1 to 13,
**characterized in that**
the conductive liquid (18) is a metal, in particular mercury, or an alloy, in particular an alloy comprising alkali metals or consisting of alkali metals or an alloy comprising gallium, in particular Galinstan, or an alloy comprising mercury, or an electrolyte solution, in particular ethanoic acid or sulfuric acid.

15. Method for interrupting a power supply from a charging station (1) to at least one electric vehicle (2), in particular an electric car,
at least comprising the steps
providing a charging station (1),
wherein the charging station (1) comprises a housing (4),
wherein the housing (4) has a column-like shape,
wherein the charging station (1) comprises a power outlet (6),
wherein the power outlet is arranged or attached to the outside of the housing (4),
wherein the power outlet (6) is connected to the electric vehicle (2) for charging the electric vehicle (2),
wherein the charging station (1) comprises at least one power supply unit (12) for providing power flow to the power outlet (6), an electric control unit (8) for controlling power flow from the power supply unit (12) to the electric vehicle (2) and a sensor unit (10) for sensing movements of the charging station (1),
wherein the sensor unit (10) comprises a receiving space (14) and a first ring-shaped sensor part (16), wherein the receiving space (14) is at least partially filled with a conductive liquid (18), wherein the conductive liquid (18) is electrically coupled with a first contact (20),
wherein the first ring-shaped sensor part (16) forms a plurality of conductive surfaces (22a-d) or surface sections (22a-d) facing a center (24) of the first ring-shaped sensor part (16), wherein each conductive surface (22a-d) or surface section (22a-d) is coupled with at least one second contact (26), wherein in a default configuration, the plurality of surfaces (22a-d) or surface sections (22a-d) is spaced apart from the conductive liquid (18) and wherein in the default configuration a longitudinal axis (28) of the charging station (1) matches a vertical axis (X),
tilting the charging station (1) into a first inclined configuration,
wherein in the first inclined configuration, the longitudinal axis (28) of the charging station (1) is inclined at an angle above a predefined threshold with respect to the vertical axis (X),
wherein the conductive liquid (18) connects in the first inclined configuration the first contact (20) via the conductive surface (22a-d) or surface section (22a-d) to at least the second contact (26) or at least one second contact (26),
providing a sensor signal or sensor data by the sensor unit (10),
wherein the sensor unit (10) provides sensor signals or sensor data according to which one or ones of the respective conductive surfaces (22a-d) or surface sections (22a-d) is/are in contact with the conductive liquid (18) in the first inclined configuration, whereby the sensor signals or sensor data represent the inclination and/or the direction of inclination,
processing the sensor signal or sensor data by the control unit (8), interrupting the power supply in case the processed sensor signal or sensor data represents a predefined inclination threshold and/or in case the direction of inclination represented by the sensor signal or sensor data represents a predefined direction of inclination.

## Patentansprüche

1. Ladestation (1) zum Laden mindestens eines Elektrofahrzeugs (2), insbesondere mindestens eines Elektroautos,
die zumindest aufweist
ein Gehäuse (4),
wobei das Gehäuse (4) eine säulenartige Form aufweist,
wobei eine Steckdose (6) an der Außenseite des Gehäuses (4) angeordnet oder aufgesetzt ist,
wobei die Steckdose (6) zumindest mittelbar, vorzugsweise direkt, mit dem Elektrofahrzeug (2) zum Laden des Elektrofahrzeugs (2) verbindbar ist,
wobei innerhalb des Gehäuses (4) zumindest eine elektrische Steuereinheit (8), eine Sensoreinheit (10) zur Erfassung von Bewegungen der Ladestation (1) und eine Stromversorgungseinheit (12) angeordnet sind,
wobei die elektrische Steuereinheit (8) den von der Stromversorgungseinheit (12) zur Steckdose (6) fließenden Strom steuert,
wobei die Sensoreinheit (10) ein Sensorsignal oder Sensordaten vorsieht, die eine Neigung und/oder eine Richtung der Neigung repräsentieren,
wobei die Sensoreinheit (10) einen Aufnahmeraum (14) und ein erstes ringförmiges Sensorteil (16) aufweist, wobei der Aufnahmeraum (14) zumindest teilweise mit einer leitfähigen Flüssigkeit (18) gefüllt ist, wobei die leitfähige Flüssigkeit (18) mit einem ersten Kontakt (20) elektrisch gekoppelt ist,
wobei das erste ringförmige Sensorteil (16) eine Vielzahl von leitenden Flächen (22a-d) oder Flächenabschnitten (22a-d) bildet, die einem Zentrum (24) des ersten ringförmigen Sensorteils (16) zugewandt sind, wobei jede leitende Fläche (22a-d) oder jeder Flächenabschnitt (22a-d) mit mindestens einem zweiten Kontakt (26) gekoppelt ist, wobei in einer Standardkonfiguration die Mehrzahl von Oberflächen (22a-d) oder Oberflächenabschnitten (22a-d) von der leitenden Flüssigkeit (18) beabstandet ist und wobei in der Standardkonfiguration eine Längsachse (28) der Ladestation (1) mit einer vertikalen Achse (X) übereinstimmt,
wobei in einer ersten geneigten Konfiguration die Längsachse (28) der Ladestation (1) in einem Winkel oberhalb eines vordefinierten Schwellenwerts in Bezug auf die vertikale Achse (X) geneigt ist,
wobei die leitfähige Flüssigkeit (18) in der ersten Schräglage den ersten Kontakt (20) und über mindestens eine der leitfähigen Flächen (22a-d) oder über mindestens einen der leitfähigen Flächenabschnitte (22a-d) mindestens den zweiten Kontakt (26) oder mindestens einen zweiten Kontakt (26) verbindet,
wobei die Sensoreinheit (10) Sensorsignale oder Sensordaten vorsieht, gemäß denen eine oder mehrere der jeweiligen leitenden Oberflächen (22a-d) oder Oberflächenabschnitte (22a-d) in der ersten geneigten Konfiguration mit der leitenden Flüssigkeit in Kontakt ist/sind, wobei das Sensorsignal oder die Sensordaten die Neigung und/oder die Neigungsrichtung repräsentieren,
wobei die Steuereinheit (8) das Sensorsignal oder die Sensordaten verarbeitet und eine Energiezufuhr unterbricht, wenn die durch das Sensorsignal oder die Sensordaten repräsentierte Neigung oberhalb einer vordefinierten Neigungsschwelle liegt und/oder wenn die durch das Sensorsignal oder die Sensordaten repräsentierte Neigungsrichtung eine vordefinierte Neigungsrichtung darstellt.

2. Ladestation gemäß Anspruch 1,
**dadurch gekennzeichnet, dass**
die leitfähigen Flächen (22a-d) oder Flächenabschnitte (22a-d) Teil eines oder mehrerer Elemente, insbesondere Wandelement/e oder Wandabschnitt/e, sind, die sich im elektrischen Widerstand voneinander unterscheiden.

3. Ladestation gemäß Anspruch 1 oder 2,
**dadurch gekennzeichnet, dass**
jede der leitenden Flächen (22a-d) oder Flächenabschnitte (22a-d) einen zweiten Kontakt (26) aufweist, wobei sich die jeweilige Stromstärke und/oder Spannung pro leitender Fläche oder Flächenabschnitt von der Stromstärke und/oder Spannung der anderen leitenden Flächen (22a-d) oder Flächenabschnitte (22a-d) unterscheidet.

4. Ladestation gemäß einem der Ansprüche 1 bis 3,
**dadurch gekennzeichnet, dass**
die Mittelachse (25) des ersten ringförmigen Sensorteils (16) in der Standardkonfiguration parallel oder koaxial zur Hochachse (X) verläuft.

5. Ladestation gemäß einem der Ansprüche 1 bis 4,
**dadurch gekennzeichnet, dass**
der erste ringförmige Sensorteil (16) mindestens vier, vorzugsweise acht oder sechzehn leitende Flächen (22a-d) oder Flächenabschnitte (22a-d) aufweist, wobei die leitenden Flächen (22a-d) oder Flächenabschnitte (22a-d) elektrisch voneinander isoliert sind.

6. Ladestation gemäß einem der Ansprüche 1 bis 5,
**dadurch gekennzeichnet, dass**
ein zweites ringförmiges Sensorteil (32) koaxial über dem ersten ringförmigen Sensorteil (16) angeordnet ist, wobei das erste ringförmige Sensorteil (16) zwischen dem zweiten ringförmigen Sensorteil (32) und dem Aufnahmeraum (14) angeordnet ist, wobei das zweite ringförmige Sensorteil (32) eine der Mittelachse (25) zugewandte leitende Fläche (34) aufweist, wobei sich die leitende Fläche (34) zumindest überwiegend und vorzugsweise vollständig entlang einer zweiten Umfangsrichtung (C2) erstreckt, wobei die leitende Fläche (34) des zweiten ringförmigen Teils (32) mit einem dritten Kontakt (36) gekoppelt ist.

7. Ladestation gemäß Anspruch 6,
**dadurch gekennzeichnet, dass**
die leitende Flüssigkeit (18) in einer zweiten geneigten Konfiguration eine oder mindestens eine leitende Fläche (22a-d) oder einen oder mindestens einen leitenden Flächenabschnitt (22a-d) des ersten ringförmigen Sensorteils (16) und die leitende Fläche (34) des zweiten ringförmigen Sensorteils (32) kontaktiert, wobei die Sensoreinheit (10) zweite Sensorsignale oder zweite Sensordaten vorsieht, wenn die leitende Flüssigkeit (18) auch die leitende Oberfläche (34) des zweiten ringförmigen Sensorteils (32) berührt, wobei die zweiten Sensorsignale oder zweiten Sensordaten die Neigung und/oder die Neigungsrichtung repräsentieren.

8. Ladestation gemäß Anspruch 6 oder 7,
**dadurch gekennzeichnet, dass**
ein drittes ringförmiges Sensorteil (38) koaxial über dem zweiten ringförmigen Sensorteil (32) angeordnet ist, wobei das zweite ringförmige Sensorteil (32) zwischen dem ersten ringförmigen Sensorteil (16) und dem dritten ringförmigen Sensorteil (38) angeordnet ist, wobei der dritte ringförmige Sensorteil (38) eine leitende Oberfläche (40) aufweist, die der Mittelachse (25) zugewandt ist, wobei sich die leitende Oberfläche (40) zumindest hauptsächlich und vorzugsweise vollständig entlang einer dritten Umfangsrichtung (C3) erstreckt, wobei die leitende Oberfläche (40) des dritten ringförmigen Teils (38) mit einem vierten Kontakt (42) gekoppelt ist.

9. Ladestation gemäß Anspruch 8,
**dadurch gekennzeichnet, dass**
die leitende Flüssigkeit (18) in einer dritten geneigten Konfiguration eine oder mindestens eine leitende Fläche (22a-d) oder einen oder mindestens einen leitenden Flächenabschnitt (22a-d) des ersten ringförmigen Sensorteils (16) und die leitende Fläche (34) des zweiten ringförmigen Sensorteils (32) und die leitende Fläche (40) des dritten ringförmigen Sensorteils (38) kontaktiert, wobei die Sensoreinheit (10) dritte Sensorsignale oder dritte Sensordaten vorsieht, wenn die leitende Flüssigkeit (18) auch die leitende Oberfläche (40) des dritten ringförmigen Sensorteils (38) berührt, wobei die dritten Sensorsignale oder dritten Sensordaten die Neigung und/oder die Neigungsrichtung repräsentieren.

10. Ladestation gemäß einem der Ansprüche 1 bis 9,
**dadurch gekennzeichnet, dass**
der erste Kontakt (20) permanent mit Strom und/oder Spannung beaufschlagt ist,

11. Ladestation gemäß einem der Ansprüche 6 bis 9,
**dadurch gekennzeichnet, dass**
der zweite Kontakt (26) oder jeder zweite Kontakt (26) permanent mit Strom und/oder Spannung beaufschlagt ist
und/oder
der dritte Kontakt (36) oder jeder dritte Kontakt (36) dauerhaft mit Strom und/oder Spannung beaufschlagt wird,
und/oder
der vierte Kontakt oder jeder vierte Kontakt dauerhaft mit Strom und/oder Spannung beaufschlagt wird,

12. Ladestation gemäß einem der Ansprüche 6 bis 11,
**dadurch gekennzeichnet, dass**
ein Winkel zwischen der Längsachse (28) der Ladestation (1) und einer horizontalen Achse (Z) in der zweiten schrägen Konfiguration kleiner ist als in der ersten schrägen Konfiguration und
ein Winkel zwischen der Längsachse (28) der Ladestation (1) und der Horizontalachse (Y) in der dritten geneigten Konfiguration kleiner ist als in der zweiten geneigten Konfiguration.

13. Ladestation gemäß einem der Ansprüche 1 bis 12,
**dadurch gekennzeichnet, dass**
die Leitfähigkeit der leitfähigen Flüssigkeit (18) über 5x10-6 S/m, insbesondere über 5x10-3 S/m oder über 5×100 S/m oder über 1x102 S/m oder über 1x103 S/m oder über 1x104 S/m oder über 1×106 S/m liegt.

14. Ladestation gemäß einem der Ansprüche 1 bis 13,
**dadurch gekennzeichnet, dass**
die leitfähige Flüssigkeit (18) ein Metall, insbesondere Quecksilber, oder eine Legierung, insbesondere eine Alkalimetalle aufweisende oder aus Alkalimetallen bestehende Legierung oder eine Gallium, insbesondere Galinstan, aufweisende Legierung oder eine Quecksilber aufweisende Legierung, oder eine Elektrolytlösung, insbesondere Ethansäure oder Schwefelsäure, ist.

15. Verfahren zur Unterbrechung einer Stromversorgung von einer Ladestation (1) zu mindestens einem Elektrofahrzeug (2), insbesondere einem Elektroauto,
das zumindest die Schritte aufweist
Vorsehen einer Ladestation (1),
wobei die Ladestation (1) ein Gehäuse (4) aufweist,
wobei das Gehäuse (4) eine säulenartige Form aufweist,
wobei die Ladestation (1) eine Steckdose (6) aufweist,
wobei die Steckdose an der Außenseite des Gehäuses (4) angeordnet oder aufgesetzt ist,
wobei die Steckdose (6) mit dem Elektrofahrzeug (2) zum Laden des Elektrofahrzeugs (2) verbunden ist,
wobei die Ladestation (1) mindestens eine Stromversorgungseinheit (12) zum Vorsehen eines Stromflusses zu der Steckdose (6), eine elektrische Steuereinheit (8) zum Steuern des Stromflusses von der Stromversorgungseinheit (12) zu dem Elektrofahrzeug (2) und eine Sensoreinheit (10) zum Erfassen von Bewegungen der Ladestation (1) aufweist,
wobei die Sensoreinheit (10) einen Aufnahmeraum (14) und ein erstes ringförmiges Sensorteil (16) aufweist, wobei der Aufnahmeraum (14) zumindest teilweise mit einer leitfähigen Flüssigkeit (18) gefüllt ist, wobei die leitfähige Flüssigkeit (18) mit einem ersten Kontakt (20) elektrisch gekoppelt ist,
wobei das erste ringförmige Sensorteil (16) eine Vielzahl von leitenden Flächen (22a-d) oder Flächenabschnitten (22a-d) bildet, die einem Zentrum (24) des ersten ringförmigen Sensorteils (16) zugewandt sind, wobei jede leitende Fläche (22a-d) oder jeder Flächenabschnitt (22a-d) mit mindestens einem zweiten Kontakt (26) gekoppelt ist, wobei in einer Standardkonfiguration die Gesamtheit der Flächen (22a-d) oder Flächenabschnitte (22a-d) von der leitenden Flüssigkeit (18) beabstandet ist und wobei in der Standardkonfiguration eine Längsachse (28) der Ladestation (1) mit einer vertikalen Achse (X) übereinstimmt,
Kippen der Ladestation (1) in eine erste geneigte Konfiguration,
wobei in der ersten geneigten Konfiguration die Längsachse (28) der Ladestation (1) um einen Winkel oberhalb eines vordefinierten Schwellenwerts in Bezug auf die vertikale Achse (X) geneigt ist,
wobei die leitfähige Flüssigkeit (18) in der ersten geneigten Konfiguration den ersten Kontakt (20) über die leitfähige Oberfläche (22a-d) oder den Oberflächenabschnitt (22a-d) mit mindestens dem zweiten Kontakt (26) oder mindestens einem zweiten Kontakt (26) verbindet,
das Vorsehen eines Sensorsignals oder von Sensordaten durch die Sensoreinheit (10),
wobei die Sensoreinheit (10) Sensorsignale oder Sensordaten vorsieht, gemäß denen eine oder mehrere der jeweiligen leitenden Oberflächen (22a-d) oder Oberflächenabschnitte (22a-d) in der ersten geneigten Konfiguration in Kontakt mit der leitenden Flüssigkeit (18) ist/sind, wobei die Sensorsignale oder Sensordaten die Neigung und/oder die Neigungsrichtung repräsentieren,
Verarbeiten des Sensorsignals oder der Sensordaten durch die Steuereinheit (8),
Unterbrechen der Stromversorgung, falls das verarbeitete Sensorsignal oder die Sensordaten eine vordefinierte Neigungsschwelle darstellen und/oder falls die durch das Sensorsignal oder die Sensordaten repräsentierte Neigungsrichtung eine vordefinierte Neigungsrichtung darstellt.

## Revendications

1. Station de charge (1) pour la charge d'au moins un véhicule électrique (2), en particulier d'au moins une voiture électrique,
comprenant au moins
un boîtier (4),
dans lequel le boîtier (4) a une forme de colonne,
dans lequel une prise de courant (6) est disposée ou fixée à l'extérieur du boîtier (4),
dans laquelle la prise de courant (6) est au moins indirectement, et de préférence directement, connectable au véhicule électrique (2) pour charger le véhicule électrique (2),
dans lequel au moins une unité de commande électrique (8), une unité de capteur (10) pour détecter les mouvements de la station de charge (1) et une unité d'alimentation électrique (12) sont disposées à l'intérieur dudit boîtier (4),
dans lequel l'unité de commande électrique (8) contrôle le flux d'énergie provenant de l'unité d'alimentation électrique (12) vers la prise de courant (6),
dans lequel l'unité de détection (10) fournit un signal de détection ou des données de détection représentant une inclinaison et/ou une direction d'inclinaison,
dans lequel l'unité de capteur (10) comprend un espace de réception (14) et une première partie de capteur en forme d'anneau (16), dans lequel l'espace de réception (14) est au moins partiellement rempli d'un liquide conducteur (18), dans lequel le liquide conducteur (18) est électriquement couplé à un premier contact (20),
dans lequel la première partie de capteur en forme d'anneau (16) forme une pluralité de surfaces conductrices (22a-d) ou de sections de surface (22a-d) faisant face à un centre (24) de la première partie de capteur en forme d'anneau (16), dans lequel chaque surface conductrice (22a-d) ou section de surface (22a-d) est couplée à au moins un second contact (26),
dans laquelle, dans une configuration par défaut, la pluralité de surfaces (22a-d) ou de sections de surface (22a-d) est espacée du liquide conducteur (18) et dans laquelle, dans la configuration par défaut, un axe longitudinal (28) de la station de charge (1) correspond à un axe vertical (X),
dans laquelle, dans une première configuration inclinée, l'axe longitudinal (28) de la station de charge (1) est incliné selon un angle supérieur à un seuil prédéfini par rapport à l'axe vertical (X),
dans laquelle le liquide conducteur (18) relie, dans la première configuration inclinée, le premier contact (20) et, via au moins une des surfaces conductrices (22a-d) ou via au moins une des sections de surface conductrice (22a-d), au moins le deuxième contact (26) ou au moins un deuxième contact (26),
dans lequel l'unité de détection (10) fournit des signaux ou des données de détection selon lesquels une ou plusieurs des surfaces conductrices (22a-d) ou sections de surface (22a-d) sont en contact avec le liquide conducteur dans la première configuration inclinée, le signal ou les données de détection représentant l'inclinaison et/ou la direction de l'inclinaison,
l'unité de commande (8) traite le signal du capteur ou les données du capteur et interrompt l'alimentation électrique si l'inclinaison représentée par le signal du capteur ou les données du capteur est supérieure à un seuil d'inclinaison prédéfini et/ou si la direction d'inclinaison représentée par le signal du capteur ou les données du capteur représente une direction d'inclinaison prédéfinie.

2. Station de charge selon la revendication 1,
**caractérisée par le fait que**
les surfaces conductrices (22a-d) ou les sections de surface (22a-d) font partie d'un ou de plusieurs éléments, en particulier d'un ou de plusieurs éléments de paroi ou d'une ou de plusieurs sections de paroi, dont la résistance électrique diffère de celle des autres.

3. Station de charge selon la revendication 1 ou 2,
**caractérisée par le fait que**
chacune des surfaces conductrices (22a-d) ou des sections de surface (22a-d) comprend un second contact (26), dans lequel le niveau respectif de courant et/ou de tension par surface conductrice ou section de surface diffère du niveau de courant et/ou de tension des autres surfaces conductrices (22a-d) ou sections de surface (22a-d).

4. Station de charge selon l'une quelconque des revendications 1 à 3,
**caractérisée par le fait que**
l'axe central (25) de la première partie du capteur en forme d'anneau (16) s'étend dans la configuration par défaut parallèlement ou coaxiale ment à l'axe vertical (X).

5. Station de charge selon l'une quelconque des revendications 1 à 4,
**caractérisée par le fait que**
la première partie de capteur en forme d'anneau (16) comprend au moins quatre et de préférence huit ou seize surfaces conductrices (22a-d) ou sections de surface (22a-d), dans lesquelles lesdites surfaces conductrices (22a-d) ou sections de surface (22a-d) sont isolées électriquement les unes des autres.

6. Station de charge selon l'une quelconque des revendications 1 à 5,
**caractérisée par le fait que**
une deuxième partie de capteur en forme d'anneau (32) est disposée de manière coaxiale au-dessus de la première partie de capteur en forme d'anneau (16), la première partie de capteur en forme d'anneau (16) étant disposée entre la deuxième partie de capteur en forme d'anneau (32) et l'espace de réception (14), dans laquelle la deuxième partie de capteur en forme d'anneau (32) comprend une surface conductrice (34) orientée vers l'axe central (25), dans laquelle la surface conductrice (34) s'étend au moins en partie et de préférence complètement le long d'une deuxième direction circonférentielle (C2), dans laquelle la surface conductrice (34) de la deuxième partie en forme d'anneau (32) est couplée à un troisième contact (36).

7. Station de charge selon la revendication 6,
**caractérisée par le fait que**
dans une deuxième configuration inclinée, le liquide conducteur (18) entre en contact avec une ou au moins une surface conductrice (22a-d) ou une ou au moins une section de surface conductrice (22a-d) de la première partie de capteur en forme d'anneau (16) et la surface conductrice (34) de la deuxième partie de capteur en forme d'anneau (32), dans lequel l'unité de détection (10) fournit des seconds signaux de détection ou des secondes données de détection dans le cas où le liquide conducteur (18) entre également en contact avec la surface conductrice (34) de la seconde partie de détection en forme d'anneau (32), dans lequel les seconds signaux de détection ou les secondes données de détection représentent l'inclinaison et/ou la direction de l'inclinaison.

8. Station de charge selon la revendication 6 ou 7,
**caractérisée par le fait que**
une troisième partie de capteur en forme d'anneau (38) est disposée de manière coaxiale au-dessus de la deuxième partie de capteur en forme d'anneau (32), la deuxième partie de capteur en forme d'anneau (32) étant disposée entre la première partie de capteur en forme d'anneau (16) et la troisième partie de capteur en forme d'anneau (38), la troisième partie de capteur annulaire (38) comprend une surface conductrice (40) orientée vers l'axe central (25), dans laquelle la surface conductrice (40) s'étend au moins en partie et de préférence entièrement le long d'une troisième direction circonférentielle (C3), dans laquelle la surface conductrice (40) de la troisième partie annulaire (38) est couplée à un quatrième contact (42).

9. Station de charge selon la revendication 8,
**caractérisée par le fait que**
dans une troisième configuration inclinée, le liquide conducteur (18) entre en contact avec une ou au moins une surface conductrice (22a-d) ou une ou au moins une section de surface conductrice (22a-d) de la première partie de capteur en forme d'anneau (16) et la surface conductrice (34) de la deuxième partie de capteur en forme d'anneau (32) et la surface conductrice (40) de la troisième partie de capteur en forme d'anneau (38), dans lequel l'unité de détection (10) fournit des signaux de troisième capteur ou des données de troisième capteur dans le cas où le liquide conducteur (18) entre également en contact avec la surface conductrice (40) de la troisième partie de capteur en forme d'anneau (38), dans lequel les signaux de troisième capteur ou les données de troisième capteur représentent l'inclinaison et/ou la direction de l'inclinaison.

10. Station de charge selon l'une quelconque des revendications 1 à 9,
**caractérisée par le fait que**
le premier contact (20) est sollicité en permanence par un courant et/ou une tension,

11. Station de charge selon l'une quelconque des revendications 6 à 9,
**caractérisée par le fait que**
le deuxième contact (26) ou chaque deuxième contact (26) est sollicité en permanence par un courant et/ou une tension
et/ou
le troisième contact (36) ou chaque troisième contact (36) est polarisé en permanence par un courant et/ou une tension,
et/ou
le quatrième contact ou chaque quatrième contact est polarisé en permanence par un courant et/ou une tension,

12. Station de charge selon l'une quelconque des revendications 6 à 11,
**caractérisée par le fait que**
un angle entre l'axe longitudinal (28) de la station de charge (1) et un axe horizontal (Z) est plus petit dans la deuxième configuration inclinée par rapport à la première configuration inclinée.
et
un angle entre l'axe longitudinal (28) de la station de charge (1) et l'axe horizontal (Y) est plus petit dans la troisième configuration inclinée par rapport à la deuxième configuration inclinée.

13. Station de charge selon l'une quelconque des revendications 1 à 12,
**caractérisée par le fait que**
la conductivité du liquide conducteur (18) est supérieure à 5x10-6 S/m, en particulier supérieure à 5x10-3 S/m ou supérieure à 5x100 S/m ou supérieure à 1x102 S/m ou supérieure à 1×103 S/m ou supérieure à 1×104 S/m ou supérieure à 1×106 S/m.

14. Station de charge selon l'une quelconque des revendications 1 à 13,
**caractérisée par le fait que**
le liquide conducteur (18) est un métal, en particulier le mercure, ou un alliage, en particulier un alliage comprenant des métaux alcalins ou constitué de métaux alcalins ou un alliage comprenant du gallium, en particulier du Galinstan, ou un alliage comprenant du mercure, ou une solution électrolytique, en particulier de l'acide éthanoïque ou de l'acide sulfurique.

15. Méthode d'interruption de l'alimentation électrique d'une station de charge (1) à au moins un véhicule électronique (2), en particulier une voiture électrique,
comprenant au moins les étapes suivantes
fournir une station de charge (1),
dans laquelle la station de charge (1) comprend un boîtier (4),
dans laquelle le boîtier (4) a une forme de colonne,
dans laquelle la station de charge (1) comprend une prise de courant (6),
dans laquelle la prise de courant est disposée ou fixée à l'extérieur du boîtier (4),
dans laquelle la prise de courant (6) est connectée au véhicule électrique (2) pour charger le véhicule électrique (2),
dans lequel la station de charge (1) comprend au moins une unité d'alimentation électrique (12) pour fournir un flux d'énergie à la prise de courant (6), une unité de commande électrique (8) pour contrôler le flux d'énergie de l'unité d'alimentation électrique (12) vers le véhicule électrique (2) et une unité de capteur (10) pour détecter les mouvements de la station de charge (1),
l'unité de détection (10) comprend un espace de réception (14) et une première partie de détection en forme d'anneau (16), l'espace de réception (14) étant au moins partiellement rempli d'un liquide conducteur (18), le liquide conducteur (18) étant couplé électriquement à un premier contact (20),
dans lequel la première partie de capteur en forme d'anneau (16) forme une pluralité de surfaces conductrices (22a-d) ou de sections de surface (22a-d) faisant face à un centre (24) de la première partie de capteur en forme d'anneau (16), dans lequel chaque surface conductrice (22a-d) ou section de surface (22a-d) est couplée à au moins un second contact (26), dans laquelle, dans une configuration par défaut, la pluralité des surfaces (22a-d) ou des sections de surface (22a-d) est espacée du liquide conducteur (18) et dans laquelle, dans la configuration par défaut, un axe longitudinal (28) de la station de charge (1) correspond à un axe vertical (X),
en inclinant la station de charge (1) dans une première configuration inclinée,
dans laquelle, dans la première configuration inclinée, l'axe longitudinal (28) de la station de charge (1) est incliné à un angle supérieur à un seuil prédéfini par rapport à l'axe vertical (X),
dans laquelle le liquide conducteur (18) relie, dans la première configuration inclinée, le premier contact (20) via la surface conductrice (22a-d) ou la section de surface (22a-d) à au moins le deuxième contact (26) ou au moins un deuxième contact (26),
fournir un signal de capteur ou des données de capteur par l'unité de capteur (10),
l'unité de détection (10) fournit des signaux ou des données de détection selon lesquels une ou plusieurs des surfaces conductrices (22a-d) ou sections de surface (22a-d) sont en contact avec le liquide conducteur (18) dans la première configuration inclinée, les signaux ou les données de détection représentant l'inclinaison et/ou la direction de l'inclinaison,
traitement du signal du capteur ou des données du capteur par l'unité de commande (8),
interrompre l'alimentation électrique si le signal du capteur ou les données du capteur traitées représentent un seuil d'inclinaison prédéfini et/ou si la direction d'inclinaison représentée par le signal du capteur ou les données du capteur représente une direction d'inclinaison prédéfinie.
